# EUROPEAN PATENT APPLICATION

(11) **EP 3 422 709 A1**
(43) Date of publication of application: **02.01.2019**
(21) Application number: 17154598.1
(22) Date of filing: 03.02.2017
(51) Int. Cl.: H04N 13/02, G06T 15/00, G06T 15/10, G06T 1/20

(54) **STEREO RENDERING**

(30) Priority: 25.01.2017 US 201715415813
(71) Applicant: Advanced Micro Devices, Inc., Santa Clara, CA 95054 (US)
(72) Inventor: Nijasure, Mangesh, Orlando, FL 32817 (US); Mantor, Michael, Orlando, FL 32817 (US); Smith, Jeffrey, Orlando, FL 32817 (US)
(74) Representative: Eve, Rosemary Margaret

(57) **Abstract**

Techniques for generating a stereo image from a single set of input geometry in a three-dimensional rendering pipeline are disclosed. Vertices are processed through the end of the world-space pipeline. In the primitive assembler, at the end of the world-space pipeline, before perspective division, each clip-space vertex is duplicated. The primitive assembler generates this duplicated clip-space vertex using the y, z, and w coordinates of the original vertex and based on an x coordinate that is offset in the x-direction in clip-space as compared with the x coordinate of the original vertex. Both the original vertex clip-space vertex and the modified clip-space vertex are then sent through the rest of the pipeline for processing, including perspective division, viewport transform, rasterization, pixel shading, and other operations. The result is that a single set of input vertices is rendered into a stereo image.

## Description

### TECHNICAL FIELD

The disclosed embodiments are generally directed to graphics processing pipelines, and in particular, to stereo rendering.

### BACKGROUND

Three-dimensional graphics processing pipelines accept commands from a host (such as a central processing unit of a computing system) and process those commands to generate pixels for display on a display device. Graphics processing pipelines include a number of stages that perform individual tasks, such as transforming vertex positions and attributes, calculating pixel colors, and the like. Graphics processing pipelines are constantly being developed and improved.

### BRIEF DESCRIPTION OF THE DRAWINGS

A more detailed understanding may be had from the following description, given by way of example in conjunction with the accompanying drawings wherein:
Figure 1 is a block diagram of an example device in which one or more disclosed embodiments may be implemented;
Figure 2 is a block diagram of the device of Figure 1, illustrating additional detail;
Figure 3 is a block diagram showing additional details of the graphics processing pipeline illustrated in Figure 2;
Figure 4 illustrates vertex transformations performed upstream of the rasterizer stage, according to an example;
Figure 5 presents a technique for generating two images from a single set of vertices, according to an example; and
Figure 6 is a flow diagram of a method 600 for generating a stereo image, according to an example.

### DETAILED DESCRIPTION

The present disclosure is directed to techniques for generating a stereo image for applications such as virtual reality, from a single set of input geometry in a three-dimensional rendering pipeline. Vertices are processed through the world-space pipeline. In the primitive assembler, at the end of the world-space pipeline, before perspective division, each clip-space vertex is duplicated. The primitive assembler generates this duplicated clip-space vertex using the y, z, and w coordinates of the original vertex and based on an x coordinate that is offset in the x-direction in clip-space as compared with the x coordinate of the original vertex. Both the original vertex clip-space vertex and the modified clip-space vertex are then sent through the rest of the pipeline for processing, including perspective division, viewport transform, rasterization, pixel shading, and other operations. In various implementations, processing of the two vertices after duplication is independent - one vertex is processed without consideration of the other vertex. The result is that a single set of input vertices is rendered into two stereo images slightly offset from each other, suitable for applications such as virtual reality.

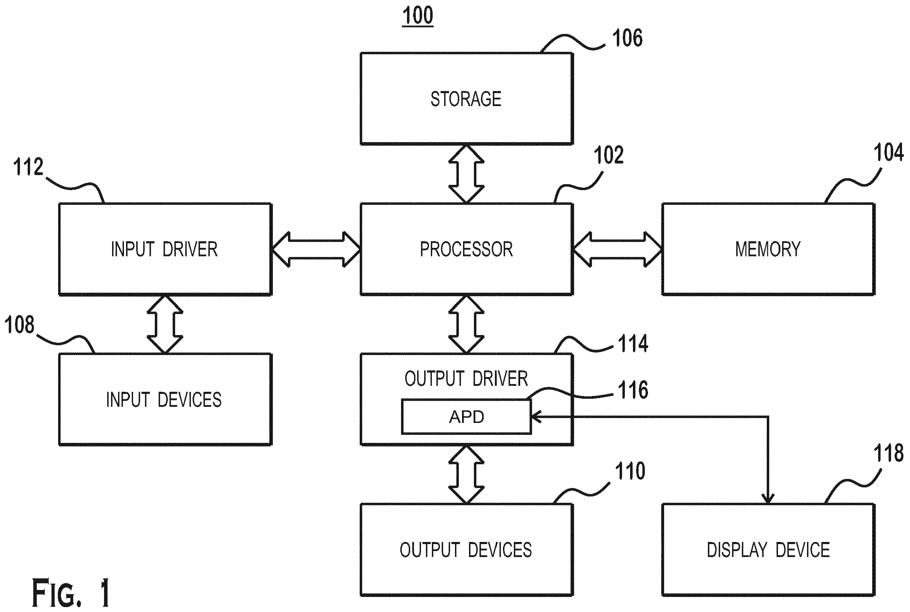

Figure 1 is a block diagram of an example device 100 in which one or more aspects of the present disclosure are implemented. The device 100 includes, for example, a computer, a gaming device, a handheld device, a set-top box, a television, a mobile phone, or a tablet computer. The device 100 includes a processor 102, a memory 104, a storage device 106, one or more input devices 108, and one or more output devices 110. The device 100 also includes an input driver 112 and an output driver 114. It is understood that the device 100 may include additional components not shown in Figure 1.

The processor 102 includes a central processing unit (CPU), a graphics processing unit (GPU), a CPU and GPU located on the same die, or one or more processor cores, wherein each processor core may be a CPU or a GPU. The memory 104 is located on the same die as the processor 102, or may be located separately from the processor 102. The memory 104 includes a volatile or non-volatile memory, for example, random access memory (RAM), dynamic RAM, or a cache.

The storage device 106 includes a fixed or removable storage, for example, a hard disk drive, a solid state drive, an optical disk, or a flash drive. The input devices 108 include a keyboard, a keypad, a touch screen, a touch pad, a detector, a microphone, an accelerometer, a gyroscope, a biometric scanner, or a network connection (e.g., a wireless local area network card for transmission and/or reception of wireless IEEE 802 signals). The output devices 110 include a display, a speaker, a printer, a haptic feedback device, one or more lights, an antenna, or a network connection (e.g., a wireless local area network card for transmission and/or reception of wireless IEEE 802 signals).

The input driver 112 communicates with the processor 102 and the input devices 108, and permits the processor 102 to receive input from the input devices 108. The output driver 114 communicates with the processor 102 and the output devices 110, and permits the processor 102 to send output to the output devices 110. The output driver 114 includes an accelerated processing device (APD) 116 which is coupled to a display device 118. The APD is configured to accept compute commands and graphics rendering commands from processor 102, to process those compute and graphics rendering commands, and to provide pixel output to display device 118 for display.

The APD 116 includes two or more parallel processing units configured to perform computations in accordance with a single-instruction-multiple-data ("SIMD") paradigm. Although two APDs 116 are illustrated, it should be understood that the teachings provided herein apply to systems including more than two APDs 116. However, functionality described as being performed by the APD 116 may also be performed by processing devices that do not process data in accordance with a SIMD paradigm.

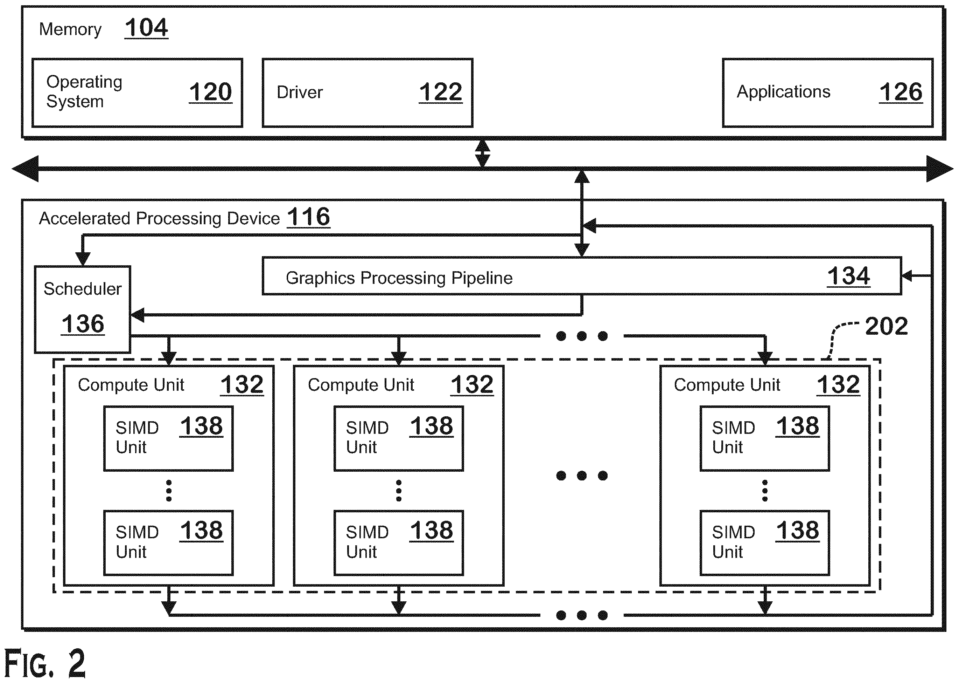

Figure 2 is a block diagram of an accelerated processing device 116, according to an example. The processor 102 maintains, in system memory 104, one or more control logic modules for execution by the processor 102. The control logic modules include an operating system 120, a driver 122, and applications 126. These control logic modules control various aspects of the operation of the processor 102 and the APD 116. For example, the operating system 120 directly communicates with hardware and provides an interface to the hardware for other software executing on the processor 102. The driver 122 controls operation of the APD 116 by, for example, providing an application programming interface ("API") to software (e.g., applications 126) executing on the processor 102 to access various functionality of the APD 116. The driver 122 also includes a just-in-time compiler that compiles shader programs for execution by processing components (such as the SIMD units 138 discussed in further detail below) of the APD 116.

The APD 116 executes commands and programs for selected functions, such as graphics operations and non-graphics operations, which may be suited for parallel processing. The APD 116 can be used for executing graphics pipeline operations such as pixel operations, geometric computations, and rendering an image to display device 118 based on commands received from the processor 102. The APD 116 also executes compute processing operations that are not directly related to graphics operations or that are completely unrelated to graphics operations, such as operations related to video, physics simulations, computational fluid dynamics, or other tasks, based on commands received from the processor 102 or some other unit.

The APD 116 includes compute units 132 (which may collectively be referred to herein as "programmable processing units 202") that include one or more SIMD units 138 that are configured to perform operations at the request of the processor 102 in a parallel manner according to a SIMD paradigm. The SIMD paradigm is one in which multiple processing elements share a single program control flow unit and program counter and thus execute the same program but are able to execute that program with different data. In one example, each SIMD unit 138 includes sixteen lanes, where each lane executes the same instruction at the same time as the other lanes in the SIMD unit 138 but can execute that instruction with different data. Lanes can be switched off with predication if not all lanes need to execute a given instruction. Predication can also be used to execute programs with divergent control flow. More specifically, for programs with conditional branches or other instructions where control flow is based on calculations performed by individual lanes, predication of lanes corresponding to control flow paths not currently being executed, and serial execution of different control flow paths, allows for arbitrary control flow to be followed. The compute units 132 include cache systems 140 that cache data retrieved from memory, such as APD memory 139 within APD 116 or system memory 104.

The basic unit of execution in compute units 132 is a work-item. Each work-item represents a single instantiation of a program that is to be executed in parallel in a particular lane. Work-items can be executed simultaneously in a "wavefront" on a single SIMD unit 138. Multiple wavefronts may be included in a "work group," which includes a collection of work-items designated to execute the same program. A work group can be executed by executing each of the wavefronts that make up the work group. The wavefronts may be executed sequentially on a single SIMD unit 138 or partially or fully in parallel on different SIMD units 138. Wavefronts can be thought of as the largest collection of work-items that can be executed simultaneously on a single SIMD unit 138. In alternative examples, a single wavefront has too many lanes to execute simultaneously on a single SIMD unit 138; instead, the wavefront is broken down into wavefront portions, each of which has a small enough number of lanes to be executed simultaneously on a SIMD unit 138. If commands received from the processor 102 indicate that a particular program is to be parallelized to such a degree that the program cannot execute on a single SIMD unit 138 simultaneously, then that program is broken up into wavefronts which are parallelized on two or more SIMD units 138 or serialized on the same SIMD unit 138 (or both parallelized and serialized as needed). A scheduler 136 is configured to perform operations related to scheduling various wavefronts on different compute units 132 and SIMD units 138. Scheduling involves assigning wavefronts for execution on SIMD units 138, determining when wavefronts have ended, and other scheduling tasks.

The parallelism afforded by the compute units 132 is suitable for graphics related operations such as pixel value calculations, vertex transformations, and other graphics operations. A graphics processing pipeline 134 which accepts graphics processing commands from the processor 102 thus provides computation tasks to the compute units 132 for execution in parallel.

The compute units 132 are also used to perform computation tasks not related to graphics or not performed as part of the "normal" operation of a graphics processing pipeline 134 (e.g., custom operations performed to supplement processing performed for operation of the graphics processing pipeline 134). An application 126 or other software executing on the processor 102 transmits programs (often referred to as "compute shader programs") that define such computation tasks to the APD 116 for execution.

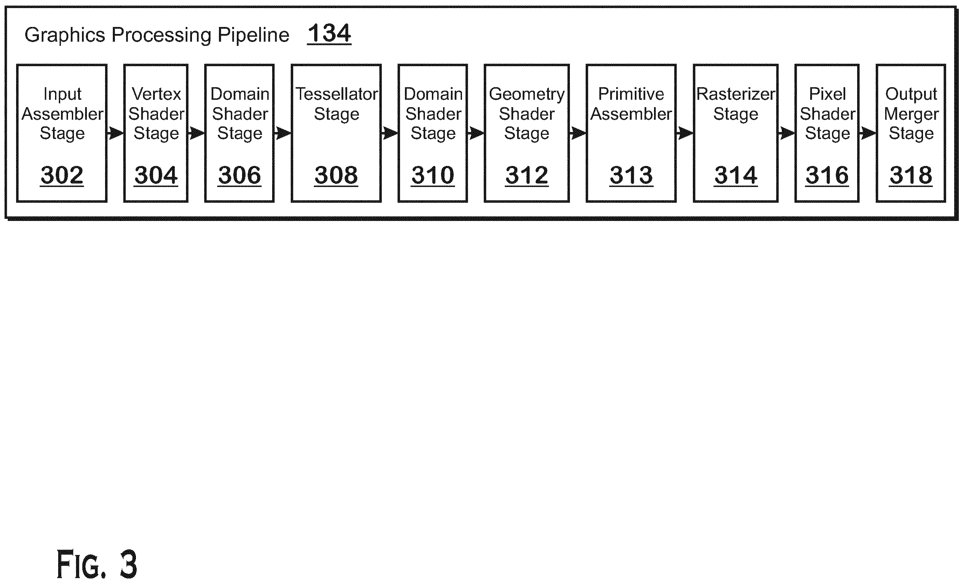

Figure 3 is a block diagram showing additional details of the graphics processing pipeline 134 illustrated in Figure 2. The graphics processing pipeline 134 includes stages, each of which performs specific functionality. The stages represent subdivisions of functionality of the graphics processing pipeline 134. Each stage is implemented partially or fully as shader programs executing in the programmable processing units 202, or partially or fully as fixed-function, non-programmable hardware external to the programmable processing units 202.

The input assembler stage 302 reads primitive data from user-filled buffers (e.g., buffers filled at the request of software executed by the processor 102, such as an application 126) and assembles the data into primitives for use by the remainder of the pipeline. The input assembler stage 302 can generate different types of primitives based on the primitive data included in the user-filled buffers. The input assembler stage 302 formats the assembled primitives for use by the rest of the pipeline.

The vertex shader stage 304 processes vertices of the primitives assembled by the input assembler stage 302. The vertex shader stage 304 performs various per-vertex operations such as transformations, skinning, morphing, and per-vertex lighting. Transformation operations may include various operations to transform the coordinates of the vertices. These operations may include one or more of modeling transformations, viewing transformations, projection transformations, perspective division, and viewport transformations. Herein, such transformations are considered to modify the coordinates or "position" of the vertices on which the transforms are performed. Other operations of the vertex shader stage 304 may modify attributes other than the coordinates.

The vertex shader stage 304 is implemented partially or fully as vertex shader programs to be executed on one or more compute units 132. The vertex shader programs are provided by the processor 102 and are based on programs that are prewritten by a computer programmer. The driver 122 compiles such computer programs to generate the vertex shader programs having a format suitable for execution within the compute units 132.

The hull shader stage 306, tessellator stage 308, and domain shader stage 310 work together to implement tessellation, which converts simple primitives into more complex primitives by subdividing the primitives. The hull shader stage 306 generates a patch for the tessellation based on an input primitive. The tessellator stage 308 generates a set of samples for the patch. The domain shader stage 310 calculates vertex positions for the vertices corresponding to the samples for the patch. The hull shader stage 306 and domain shader stage 310 can be implemented as shader programs to be executed on the programmable processing units 202.

The geometry shader stage 312 performs vertex operations on a primitive-by-primitive basis. A variety of different types of operations can be performed by the geometry shader stage 312, including operations such as point sprint expansion, dynamic particle system operations, fur-fin generation, shadow volume generation, single pass render-to-cubemap, per-primitive material swapping, and per-primitive material setup. Operations for the geometry shader stage 312 may be performed by a shader program that executes on the programmable processing units 202.

The primitive assembler 313 receives primitives from other units in the graphics processing pipeline 134 and performs certain operations to prepare those primitives for processing by the rasterizer stage 314 and subsequent stages. Those operations include, but are not limited to, performing culling such as frustum culling, back face culling, and small triangle discard, performing perspective division, and performing the viewport transform. Culling includes operations to eliminate primitives that will not contribute to the final scene. Perspective division modifies primitives to account for perspective, dividing x, y, and z coordinates by the homogeneous vertex coordinate w, which has the effect of moving farther vertices closer to the vanishing point and moving closer vertices farther from the vanishing point. The viewport transform converts the coordinates output from perspective division (normalized device coordinates) to coordinates in screen space, with coordinate values aligning with the pixel positions of a screen.

The rasterizer stage 314 accepts and rasterizes simple primitives and generated upstream. Rasterization consists of determining which screen pixels (or sub-pixel samples) are covered by a particular primitive. Rasterization is performed by fixed function hardware.

The pixel shader stage 316 calculates output values for screen pixels based on the primitives generated upstream and the results of rasterization. The pixel shader stage 316 may apply textures from texture memory. Operations for the pixel shader stage 316 are performed by a shader program that executes on the programmable processing units 202.

The output merger stage 318 accepts output from the pixel shader stage 316 and merges those outputs, performing operations such as z-testing and alpha blending to determine the final color for a screen pixel.

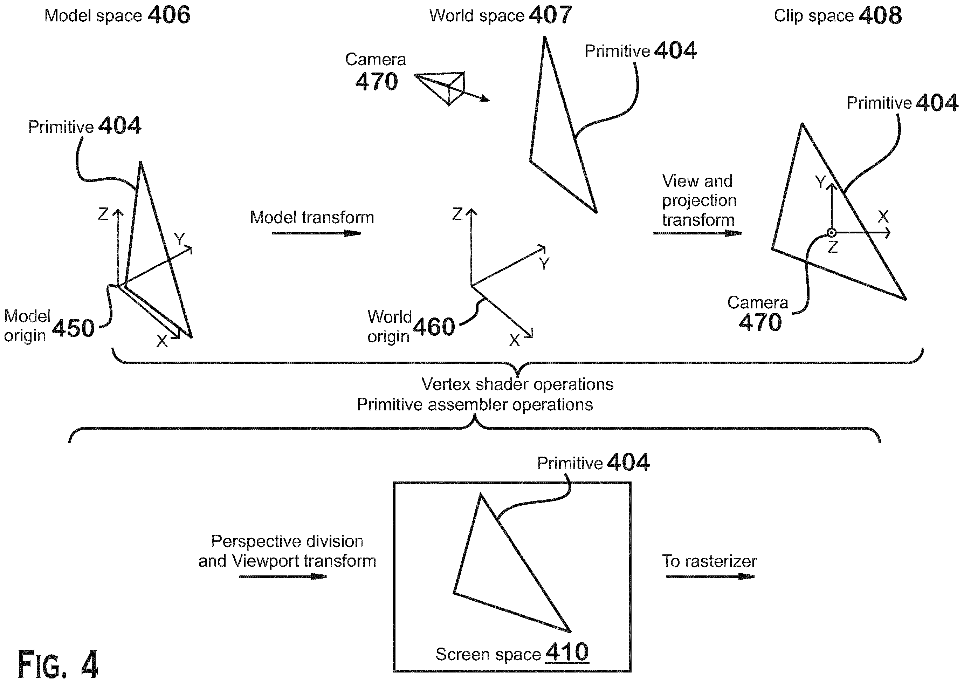

Figure 4 illustrates vertex transformations performed upstream of the rasterizer stage 314, according to an example. These vertex transformations begin with coordinates provided by an application 126 in model space 406 and end with coordinates in screen space 410. Each transformation is associated with a transformation matrix that converts an input vertex from one system of coordinates to a different system of coordinates. In various examples, transformations are performed via matrix multiplication. Multiplication of vertex in a particular coordinate system by a matrix associated with a particular vertex transformation converts the input vertex to an output vertex associated with the resultant coordinate system for the matrix. For example, a matrix associated with converting from model space to world space is multiplied by a vertex in model space to convert that vertex to world space.

In various situations, individual matrices are combined through matrix multiplication into a single matrix associated with multiple transformations. In one example, the matrix associated with converting from model space to world space is multiplied by the matrix associated with converting from world space to view space, and the resulting matrix is further multiplied by the matrix associated with converting from view space to clip space to form a model-view-projection matrix. This single matrix is used to directly convert vertices from model space to view space. In many situations, this matrix multiplication is specified by a vertex shader program and performed by the compute units 132 at the direction of such vertex shader programs.

The vertex transformations discussed above are illustrated in Figure 4. A primitive 404 is shown in model space 406. The coordinates of the primitive 404 in model space 406 are with respect to a model origin 450. The model transform transforms the primitive 404 to world space 407, where the coordinates are with respect to the world origin 460. The view transform and projection transform transforms the primitive 404 to clip space 408, in which the z-axis points in the direction that the camera 470 is looking and in which perspective is accounted for. Clip space 408 is a 4-dimensional space with an extra coordinate w - the homogeneous vertex coordinate. The purpose of w is to account for perspective in screen space 410. More specifically, a higher w is associated with geometry that is farther from the camera and a lower w is associated with geometry that is closer to the camera. During perspective division, which includes dividing x, y, z (and w) coordinates of a vertex by w, the x, y, and z coordinates are modified based on the value of w, which is based on depth. This division makes closer objects take up more of the screen and makes farther objects take up less of the screen. Perspective division converts vertices from clip space 408 to normalized device coordinates (not shown). After perspective division, the viewport transform converts the converts the vertices to screen space - a system of coordinates that aligns with the pixels of the screen or render target. For example, vertices may range from 0 to 1024 horizontally and 0 to 768 vertically for a 4x3 aspect ratio screen in screen space.

The model transform, view transform, and projection transform are performed in the vertex shader stage 304 of the graphics processing pipeline 134. The primitive assembler 313 performs perspective division and the viewport transform to convert the primitive 404 to screen space 410. Primitives 404 in screen space 410 are sent to the rasterizer stage 314 and subsequent stages for rendering into pixels in the render surface (e.g., the screen or some other surface on which images are generated, such as a texture).

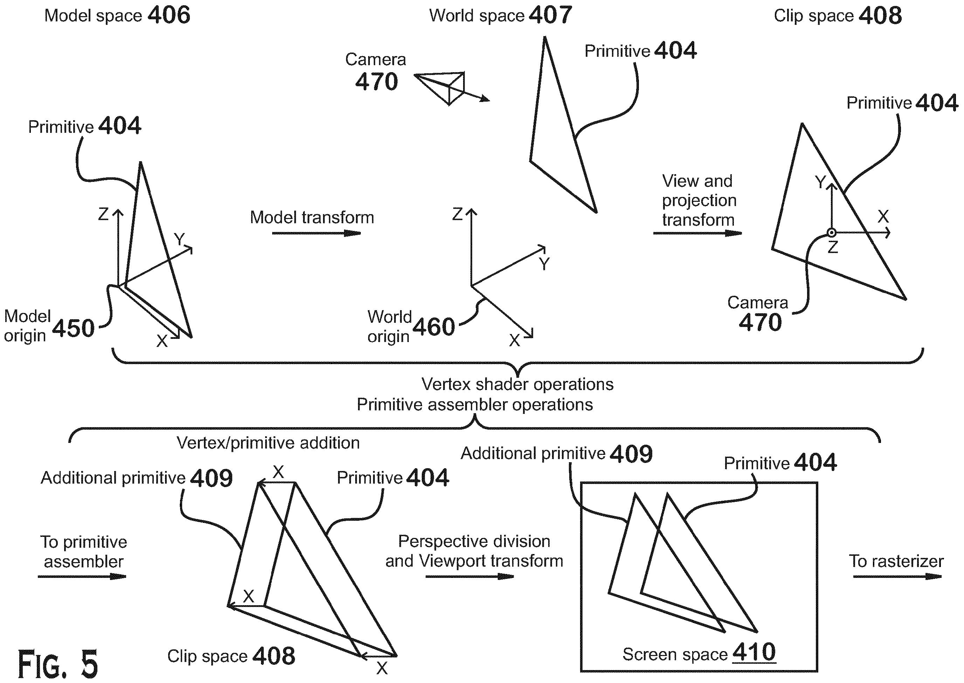

Display devices exist for providing a three dimensional view to a user. These devices display two slightly different images and provide these two different images - a stereo image - to the different eyes of a user to give a sense of depth to three-dimensional images. Figure 5 presents a technique for generating two images for a stereo image from a single set of vertices, according to an example.

To create the two images, the graphics processing pipeline 134 processes vertices received for rendering (e.g., from the processor 102) as normal, performing operations for the vertex shader stage 304, the hull shader stage 306, tessellator stage 308, and domain shader stage 310 if tessellation is enabled, and the geometry shader stage 312 if geometry shading is enabled.

Upon receiving a clip space vertex, the primitive assembler 313 duplicates that vertex, but with an offset to the x (horizontal) direction in the duplicated vertex in clip space, as compared with the original vertex. More specifically, in clip space, that is, prior to perspective division and the viewport transform, the duplicated vertex has the same y, z, and w coordinates as the original vertex from which duplication occurs. However, in clip space, the x value of the duplicated vertex is equal to the x value of the original vertex plus a constant value offset. This displacement is illustrated in Figure 5 as "X."

In one alternative, the modified x value of the duplicated vertex is generated in the vertex shader stage 304 by a vertex shader program. The vertex shader program performs the normal matrix multiplication of the model-view-projection matrix by an input vertex and also performs multiplication of the input vertex by a second model-view-projection matrix for generation of the duplicated vertex. The vertex shader program forwards the x value of the duplicated vertex in clip space (as well as the original vertex in clip space) to the primitive assembler 313. The primitive assembler 313 assembles the duplicated vertex in clip space by extracting the y, z, and w values from the original vertex and including, as the x value of the duplicated vertex, the x value of the duplicated vertex from the vertex shader program to generate the duplicated vertex.

In another alternative, the application 126 or device driver 122 determines a clip-space x offset and transmits that value to the primitive assembler 313. The primitive assembler 313 generates duplicate vertices for vertices received by the primitive assembler 313 in clip space by extracting the y, z, and w values from the original vertex, and including, as the x value of the duplicated vertex, the x value from the original vertex added to the received x offset.

In yet another alternative, a vertex shader program generates the x, y, z, and w coordinates for the duplicated vertex and transmits those x, y, z, and w coordinates to the primitive assembler 313. As with the first alternative, the vertex shader program performs the normal matrix multiplication by the first model-view-projection matrix on the input vertex to generate the original vertex and also performs multiplication of the second model-view-projection matrix to generate the duplicated vertex. The vertex shader program forwards both the original vertex and the duplicated vertex to the primitive assembler 313 for processing.

In the first alternative, the vertex shader program generates the x value for the duplicated vertex, in clip space, in addition to multiplying the vertex received for rendering (e.g., from the processor 102) by a first model-view-projection matrix to generate the "original" vertex in clip space (where the "original" vertex refers to the vertex in clip space that the duplicated vertex is based on). The vertex shader program generates the x value for the duplicated vertex by multiplying the vertex received for rendering by a second model-view-projection matrix and extracting the x value of the result. The relationship between the first model-view-projection matrix and the second model-view-projection matrix for both the first and third alternative is as follows. As described above, the model-view-projection matrix is a matrix product of a model matrix, a view matrix, and a projection matrix. The model matrix and projection matrix are the same for both the first model-view-projection matrix and the second first model-view-projection matrix. The view matrix for the second model-view-projection matrix is similar to the view matrix for the first model-view-projection matrix, except that the view matrix for the second model-view-projection matrix has the effect of generating an x value in eye space that is equal to the x value of the original vertex in eye space plus an offset in eye space. If the vertex shader program provided by an application 126 is not configured to include the multiplication by the second model-view-projection matrix to generate the duplicated vertex, then the driver 122 modifies that vertex shader program to include the multiplication by the second model-view-projection matrix. To do this, the driver generates the appropriate view transform matrix to offset the x coordinate in eye space, extracts the model transform matrix and projection transform matrix from the first model-view-projection matrix included in the vertex shader program provided by the application 126, and generates the second model-view-projection matrix by multiplying the generated view transform matrix by the extracted model transform matrix and the extracted projection transform matrix.

In the second alternative, the driver 122 generates the offset based on a stored default value, a request from an application 126, or based on user input. For user input, a slider can be presented to a user for selection of a particular x offset in clip space. The result of the input to this slider is then used as the offset and sent to the primitive assembler 313 for addition to the x coordinate.

In any of the above alternatives, the primitive assembler 313 performs perspective division and the viewport transform on both the original vertex and the duplicated vertex and transmits those vertices to the rasterizer stage 314 for processing. These later stages process both the original vertex and the duplicated vertex independently, performing the operations associated with those stages as if two different sets of geometry were provided to the input of the graphics processing pipeline 134. The result is that the graphics processing pipeline 134 generates stereo images - one image for the right eye of a user and one image for the left eye of a user - based on a single set of input geometry. An original primitive 404 and an additional (duplicated) primitive, offset in the x direction in clip space 408 are illustrated in Figure 5.

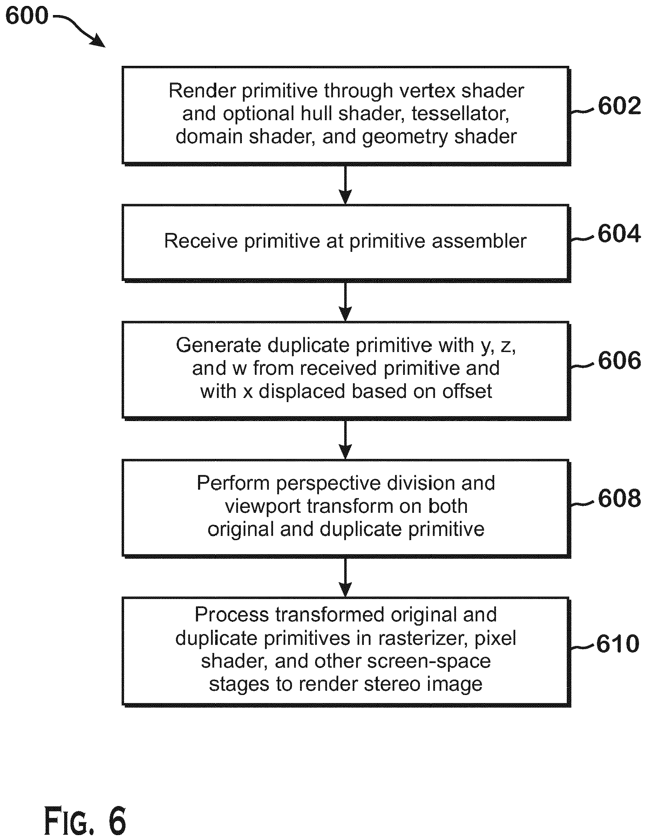

Figure 6 is a flow diagram of a method 600 for generating a stereo image, according to an example. Although described with respect to the system shown and described with respect to Figures 1-5, it should be understood that any system configured to perform the method, in any technically feasible order, falls within the scope of the present disclosure.

The method 600 begins at step 602, where the graphics processing pipeline 134 renders a primitive through the vertex shader stage 304 and the hull shader stage 306, tessellator stage 308, domain shader stage 310, and geometry shader stage 312 if enabled. The result is a primitive with vertices in clip space. At step 604, the primitive assembler 313 receives the primitive with vertices in clip space. At step 606, the primitive assembler 313 generates a duplicate primitive, also in clip space. The y, z, and w coordinates of the duplicate primitive are the same as the y, z, and w coordinates of the original primitive. The x coordinate of the vertices of the duplicate primitive is the sum of the x coordinate of the original primitive and an offset value. In alternative implementations, the primitive assembler 313 generates the x coordinate of the duplicate primitive by adding an offset received from the device driver 122 to the x coordinate of the original primitive, by receiving the x coordinate generated by a vertex shader program and substituting that x coordinate for the x coordinate of the original coordinate to generate the duplicate vertex, or by receiving a full duplicate vertex generated by the vertex shader program.

At step 608, the primitive assembler 313 performs perspective division and the viewport transform on both the original primitive and the duplicate primitive to obtain two primitives in screen space, thereby forming a stereo image. At step 610, the graphics processing pipeline 134 processes the two primitives in screen space in the rasterizer stage 314, pixel shader stage 316, output merger stage 318, and other units not shown in the graphics processing pipeline 134 to generate corresponding pixels for a stereo image.

A method for generating a stereo image is provided. The method includes processing a first vertex through a vertex shader stage of a graphics processing pipeline to generate a first clip space vertex, obtaining a modified x coordinate in clip space, the modified x coordinate being the sum of a clip space offset value and an x coordinate of the first clip space vertex, generating a second clip space vertex based on the modified x coordinate, the second clip space vertex including y, z, and w coordinates of the first clip space vertex, and processing both the first clip space vertex and the second clip space vertex to form the stereo image.

An accelerated processing device ("APD") for generating a stereo image is also provided. The APD includes a graphics processing pipeline comprising and a primitive assembler. The vertex shader stage is configured to process a first vertex to generate a first clip space vertex. The primitive assembler is configured to obtain a modified x coordinate in clip space, the modified x coordinate being the sum of a clip space offset value and an x coordinate of the first clip space vertex, generate a second clip space vertex based on the modified x coordinate, the second clip space vertex including y, z, and w coordinates of the first clip space vertex, and process both the first clip space vertex and the second clip space vertex to form the stereo image.

A computing device for generating a stereo image is also provided. The computing device includes a processor configured to generate requests for rendering geometry and an accelerated processing device ("APD") for generating the stereo image. The APD includes a graphics processing pipeline comprising and a primitive assembler. The vertex shader stage is configured to process a first vertex to generate a first clip space vertex. The primitive assembler is configured to obtain a modified x coordinate in clip space, the modified x coordinate being the sum of a clip space offset value and an x coordinate of the first clip space vertex, generate a second clip space vertex based on the modified x coordinate, the second clip space vertex including y, z, and w coordinates of the first clip space vertex, and process both the first clip space vertex and the second clip space vertex to form the stereo image.

The techniques provided herein allow for generation of stereo images without duplication of work through much of a graphics processing pipeline. More specifically, some naively implemented techniques for generating stereo images require that two different sets of input geometry (e.g., vertices) are provided to a graphics processing pipeline. The two different sets of input geometry are essentially independent and are processed through each stage of the graphics processing pipeline. With the techniques provided herein, processing through stages such as the vertex shader stage, hull shader stage, tessellator stage, domain shader stage, and geometry shader stage, is not duplicated.

It should be understood that many variations are possible based on the disclosure herein. Although features and elements are described above in particular combinations, each feature or element may be used alone without the other features and elements or in various combinations with or without other features and elements.

The methods provided may be implemented in a general purpose computer, a processor, or a processor core. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine. Such processors may be manufactured by configuring a manufacturing process using the results of processed hardware description language (HDL) instructions and other intermediary data including netlists (such instructions capable of being stored on a computer readable media). The results of such processing may be maskworks that are then used in a semiconductor manufacturing process to manufacture a processor which implements aspects of the embodiments.

The methods or flow charts provided herein may be implemented in a computer program, software, or firmware incorporated in a non-transitory computer-readable storage medium for execution by a general purpose computer or a processor. Examples of non-transitory computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

## Claims

1. A method for generating a stereo image, the method comprising:
processing a first vertex through a vertex shader stage of a graphics processing pipeline to generate a first clip space vertex;
obtaining a modified x coordinate in clip space, the modified x coordinate being the sum of a clip space offset value and an x coordinate of the first clip space vertex;
generating a second clip space vertex based on the modified x coordinate, the second clip space vertex including y, z, and w coordinates of the first clip space vertex; and
processing both the first clip space vertex and the second clip space vertex to form the stereo image.

2. The method of claim 1, wherein obtaining the modified x coordinate comprises:
receiving the modified x coordinate from the vertex shader stage of the graphics processing pipeline.

3. The method of claim 2, further comprising:
generating the modified x coordinate by multiplying a modified model-view-projection matrix by the first vertex to obtain a result and extracting the modified x coordinate from the result.

4. The method of claim 3, wherein:
processing the first vertex to generate the first clip space vertex comprises multiplying the first vertex by a model-view-projection matrix that comprises a matrix product of a model transform matrix, a view transform matrix, and a projection transform matrix; and
the modified model-view-projection matrix comprises a matrix product of the model transform matrix, a modified view transform matrix, and the projection transform matrix, wherein the modified view transform matrix comprises the view transform matrix of the model-view-projection matrix, modified to offset x in eye space as compared with the first vertex.

5. The method of claim 1, wherein obtaining the modified x coordinate comprises:
receiving the clip space offset value from a device driver configured to execute in a host that provides the first vertex for rendering; and
adding the clip space offset value to the x coordinate of the first clip space vertex.

6. The method of claim 1, wherein processing both the first clip space vertex and the second clip space vertex to form the stereo image comprises:
performing perspective division and a viewport transform on the first clip space vertex and the second clip space vertex to generate a first screen space vertex and a second screen space vertex.

7. The method of claim 6, wherein processing both the first clip space vertex and the second clip space vertex to form the stereo image further comprises:
rasterizing a first primitive associated with the first screen space vertex and a second primitive associated with the second screen space vertex to generate a first set of fragments and a second set of fragments; and
shading the first set of fragments and second set of fragments to generate a set of output pixels for the stereo image.

8. An accelerated processing device ("APD") for generating a stereo image, the APD comprising:
a graphics processing pipeline comprising:
a vertex shader stage configured to process a first vertex to generate a first clip space vertex; and
a primitive assembler configured to:
obtain a modified x coordinate in clip space, the modified x coordinate being the sum of a clip space offset value and an x coordinate of the first clip space vertex,
generate a second clip space vertex based on the modified x coordinate, the second clip space vertex including y, z, and w coordinates of the first clip space vertex, and
process both the first clip space vertex and the second clip space vertex to form the stereo image.

9. The APD of claim 8, wherein the primitive assembler is configured to obtain the modified x coordinate by:
receiving the modified x coordinate from the vertex shader stage of the graphics processing pipeline.

10. The APD of claim 9, wherein the vertex shader stage is configured to generate the modified x coordinate by:
multiplying a modified model-view-projection matrix by the first vertex to obtain a result and extracting the modified x coordinate from the result.

11. The APD of claim 10, wherein:
the vertex shader stage is configured to process the first vertex to generate the first clip space vertex by multiplying the first vertex by a model-view-projection matrix that comprises a matrix product of a model transform matrix, a view transform matrix, and a projection transform matrix; and
the modified model-view-projection matrix comprises a matrix product of the model transform matrix, a modified view transform matrix, and the projection transform matrix, wherein the modified view transform matrix comprises the view transform matrix of the model-view-projection matrix, modified to offset x in eye space as compared with the first vertex.

12. The APD of claim 8, wherein the primitive assembler is configured to obtain the modified x coordinate by:
receiving the clip space offset value from a device driver configured to execute in a host that provides the first vertex for rendering; and
adding the clip space offset value to the x coordinate of the first clip space vertex.

13. The APD of claim 8, wherein:
the primitive assembler is configured to process both the first clip space vertex and the second clip space vertex to form the stereo image by performing perspective division and a viewport transform on the first clip space vertex and the second clip space vertex to generate a first screen space vertex and a second screen space vertex.

14. The APD of claim 13, wherein the graphics processing pipeline further comprises:
a rasterizer stage configured to rasterize a first primitive associated with the first screen space vertex and a second primitive associated with the second screen space vertex to generate a first set of fragments and a second set of fragments; and
a pixel shader stage configured to shade the first set of fragments and second set of fragments to generate a set of output pixels for the stereo image.

15. A computing device for generating a stereo image, the computing device comprising:
a processor configured to generate requests for rendering geometry; and
an accelerated processing device ("APD") for generating a stereo image, the APD comprising:
a graphics processing pipeline comprising:
a vertex shader stage configured to process a first vertex, based on the requests for rendering geometry, to generate a first clip space vertex; and
a primitive assembler configured to:
obtain a modified x coordinate in clip space, the modified x coordinate being the sum of a clip space offset value and an x coordinate of the first clip space vertex,
generate a second clip space vertex based on the modified x coordinate, the second clip space vertex including y, z, and w coordinates of the first clip space vertex, and
process both the first clip space vertex and the second clip space vertex to form the stereo image.
